(19) Europäisches Patentamt
European Patent Office
Office européen des brevets

(11) EP 2 864 544 B1

(12) **EUROPEAN PATENT SPECIFICATION**

(45) Date of publication and mention of the grant of the patent:
**01.01.2020 Bulletin 2020/01**

(21) Application number: **13742485.9**

(22) Date of filing: **25.06.2013**

(51) Int Cl.:
***D21H 25/06*** *(2006.01)* ***B65D 65/40*** *(2006.01)*
***D21H 27/10*** *(2006.01)* ***D21H 11/16*** *(2006.01)*
***D21H 11/18*** *(2006.01)* ***D21H 11/20*** *(2006.01)*
***D21H 17/07*** *(2006.01)* ***D21H 17/11*** *(2006.01)*
***D21H 17/14*** *(2006.01)* ***D21H 17/00*** *(2006.01)*
***D21H 21/16*** *(2006.01)*

(86) International application number:
**PCT/IB2013/001342**

(87) International publication number:
**WO 2014/001874 (03.01.2014 Gazette 2014/01)**

(54) **METHODS FOR BIODEGRADABLE DERIVATIZATION OF CELLULOSIC SURFACES**

VERFAHREN FÜR BIOLOGISCH ABBAUBARE DERIVATISIERUNG VON CELLULOSISCHEN OBERFLÄCHEN

PROCÉDÉS DE DÉRIVATISATION BIODÉGRADABLE DE SURFACES CELLULOSIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2012 US 201213531939**

(43) Date of publication of application:
**29.04.2015 Bulletin 2015/18**

(60) Divisional application:
**19211000.5**

(73) Proprietor: **Philip Morris Products S.A.**
**2000 Neuchatel (CH)**

(72) Inventor: **TRIGIANTE, Giussepe**
**Watford, Hertfordshire WD17 1QQ (GB)**

(74) Representative: **Millburn, Julie Elizabeth**
**Reddie & Grose LLP**
**The White Chapel Building**
**10 Whitechapel High Street**
**London E1 8QS (GB)**

(56) References cited:
**US-A- 5 856 006** **US-A1- 2008 265 222**

EP 2 864 544 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### FIELD OF THE INVENTION

The present invention relates generally to a method for treating a surface of a solid cellulose-containing material, and a product resulting from such method. The method makes cellulose-based materials more hydrophobic using a composition which esterifies available hydroxyl groups, where such a composition is useful in modifying/coating surfaces of cellulose-based materials including packaging products.

### BACKGROUND INFORMATION

Cellulosic materials have a wide range of applications in industry as bulking agents, absorbents, and printing components. Their employment is preferred to that of other sources of material for their high thermal stability, good oxygen barrier function, and chemical/mechanical resilience (see, e.g., Aulin et al., Cellulose (2010) 17:559-574). Of great relevance is also the fact that these materials are fully biodegradable once dispersed in the environment, and that they are totally nontoxic. Cellulose and derivatives thereof are the material of choice for environmentally friendly solutions in applications such as packaging for foodstuff and disposable goods.

The many advantages of cellulose are nonetheless countered by the hydrophilicity of the material, which shows a high affinity for water and are easily hydrated (see, e.g., Aulin et al., Langmuir (2009) 25(13):7675-7685). While this is a benefit for applications such as absorbents and tissues, it becomes an issue when the safe packaging of watery material (e.g., foodstuffs) is required. Long term storage of food, especially ready made meals which contain a significant amount of water, is made problematic in cellulose trays as they would first become soggy and then ultimately disrupt under the hydration of their fibers.

This problem is usually addressed in the industry by coating the cellulose fiber with some kind of hydrophobic organic material, for example a resin or a polymer, which would physically shield the underlying hydrophilic cellulose from the water in the contents. Materials such as PVC are routinely used for this purpose and are physically attached (i.e., spray coated) on the surfaces to be treated.

A similar problem is encountered when sealing foodstuff in its container by means of a film. This film requires even more stringent properties than the container itself. On top of the resistance to mechanical stress, the film must be thin enough to be peeled off, should ideally be transparent, heat resistant, and impermeant to gases such as $CO_2$ and oxygen, non toxic, and hydrophobic. Again, plastic in the form of polymers and resin is the present solution of the industry.

The need to come up with more environmentally friendly, as well as renewable, packaging solutions has cast a shadow over the use of plastic. New materials have been designed which are either derived from natural sources or semi-synthetic sources and therefore are renewable and/or biodegradable. Materials such as poly-lactic acid (PLA) and poly hydroxyalkanoate (PHA) are the present golden standard for biodegradable "plastics." However, they suffer the drawbacks of heat instability and water sensitivity which severely limit their use in the packaging industry. It would be desirable to design a coating which is both heat resistant and hydrophobic, without sacrificing biodegradability.

US 5,856,001 A1 is related to a tobacco filter material containing fibres which have a core and a surface layer which surrounds the core, wherein the core comprises a non-esterified cellulose and the surface layer comprises a cellulose ester.

US 208/0265222A1 is related to multifunctional surface-modified cellulose-containing fibres, especially for producing paper and cardboard packagings.

## SUMMARY OF THE INVENTION

The problem underlying the present invention is solved by the subject matter of the attached independent claims; preferred embodiments may be taken from the attached dependent claims.

More specifically, the problem underlying the present invention is solved in a first aspect by a method for treating a surface of a solid cellulose-containing material comprising:

applying to said surface a composition comprising: an alkanoic acid derivative having the formula (I) or formula (II):

R-CO-X        Formula (I)

$X\text{-}CO\text{-}R\text{-}CO\text{-}X_1$        (II) Formula (II),

wherein R is a straight-chain, branched-chain, or cyclic aliphatic hydrocarbon radical having from 6 to 50 carbon atoms, and wherein X and $X_1$ are independently Cl, Br, or O(CO)OR,

a base, and

a first solvent;

heating the applied composition on said surface;

rinsing said surface with a second solvent; and

drying said rinsed surface,

wherein said composition esterifies 60-90% of the hydroxyl groups available on the surface of the cellulose-containing material.

In an embodiment of the first aspect, the base is non-nucleophilic, preferably the base is organic and more preferably the organic base is selected from the group consisting of aziridines, azetidines, piperazines, piperidines, pyridines, bipyridines, terpyridines, dihydropyridines, morpholines, N-alkylmorpholines, 1,4-diazabicyclo[2.2.2]octanes, 1,8-diazabicycloundecanes, 1,8-diazabicycloundecenes, dimethylated pentylamines, trimethylated pentylamines, pyrimidines, pyrroles, pyrrolidines, pyrrolidinones, indoles, indolines, indanones, benzindazones, imidazoles, benzimidazoles, imidazolones, imidazolines, oxazoles, isoxazoles, oxazolines, oxadiazoles, thiadiazoles, carbazoles, quinolines, isoquinolines, naphthyridines, triazines, triazoles, tetrazoles, triethylamines, pyrazoles, pyrazolines, and combinations thereof.

In an embodiment of the first aspect, the first and second solvents are selected from the group consisting of pentane, hexane, heptane, octane, petroleum ether, naphtha, kerosene, petroleum, paraffin oil, benzene, toluene, xylene, mesitylene, ethylbenzene, diethylbenzene, methylene chloride, chloroform, 1,2-dichloro-ethane, chlorobenzene, carbon tetrachloride, tetrabromoethylene, cyclopentane, cyclohexane, methylcyclohexane, anisole (methyl phenyl ether), tert-butyl methyl ether, dibenzyl ether, diethyl ether, dioxane, diphenyl ether, methyl vinyl ether, tetrahydrofuran, triisopropyl ether, diethylene glycol diethyl ether, diethylene glycol dimethyl ether (diglyme), diethylene glycol monobutyl ether, diethylene glycol monomethyl ether, 1,2-dimethoxyethane (DME, monoglyme), ethylene glycol monobutyl ether, triethylene glycol dimethyl ether (triglyme), triethylene glycol monomethyl ether, acetone, diisobutyl ketone, methyl n-propyl ketone; methyl ethyl ketone, methyl isobutyl ketone, methyl formate, methyl acetate, ethyl acetate, n-propyl acetate, n-butyl acetate, and combinations thereof.

In an embodiment of the first aspect, the solid cellulose-containing material comprises a cellulose selected from the group consisting of nanocellulose, cellulose nanofibres, whiskers or microfibril, microfibrillated or nanofibril cellulose, sugarcane cellulose, cotton or cotton blends, and combinations thereof.

In an embodiment of the first aspect, alkanoic acid derivative is selected from the group consisting of acid chlorides, acid bromides, acid iodides, anhydrides, ketenes, diketenes, chlorocarbolic acid esters, carbonic acid diesters, 2,5-diketooxazolidines, isatinic anhydride, isocyanates, carbamoyl chlorides, thiocyanates, thiocarbamoyl chlorides, sulfonyl chlorides, sulfonic acid anhydrides, N-chlorosulfonamides, sulfinic acid chlorides, N-chlorosulfinamides, and combinations thereof, and

wherein the resulting surface of the cellulose-based material exhibits a water contact angle of 100°.

In an embodiment of the first aspect, said esterified hydroxyl groups are stable from - 100 °C to 300 C.

In an embodiment of the first aspect, the solid cellulose-containing material is selected from the group consisting of a carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre, a water storage and conveying implement, a storage and conveying implement for alcoholic or non-alcoholic drinks, an outer casing or screen for electronic goods, an internal or external piece of furniture, a curtain, and combinations thereof.

In an embodiment of the first aspect, R is a straight-chain, branched-chain, or cyclic aliphatic hydrocarbon radical having from 10 to 40 carbon atoms, and wherein the resulting treated solid cellulose-containing material exhibits properties selected from the group consisting of stable up to at least 200° C, an oxygen permeability of less than 10 Barrer units, a water vapour permeability of less than 20 Barrer units, and combinations thereof.

In an embodiment of the first aspect, the product is selected from the group consisting of a carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre, a water storage and conveying implement, a storage and

conveying implement for alcoholic or non-alcoholic drinks, an outer casing or screen for electronic goods, an internal or external piece of furniture, a curtain, and combinations thereof.

In an embodiment of the first aspect, the solid cellulose-containing material is a film or a fabric.

More specifically, the problem underlying the present invention is solved in a second aspect by a product resulting from the process according to the first aspect, including any embodiment thereof, wherein the surface of the solid cellulose-containing material exhibits a water contact angle of between 60° to 120°, and wherein 60-90% of the hydroxyl groups on the surface of the cellulose-containing material are esterified.

In an embodiment of the second aspect, the surface treatment is chemically stable up to temperatures of between 200° C to 300° C.

In an embodiment of the second aspect, the water vapour permeability of the treated surface is between 10 Barrer units to 20 Barrer units.

In an embodiment of the second aspect, the oxygen permeability of the treated surface is between 10 Barrer units to 20 Barrer units.

In an embodiment of the second aspect, the product is biodegradable.

In an embodiment of the second aspect, the product is selected from the group consisting of a carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre, a water storage and conveying implement, a storage and conveying implement for alcoholic or non-alcoholic drinks, an outer casing or screen for electronic goods, an internal or external piece of furniture, a curtain, and combinations thereof.

The present invention as defined in the claims relates to a method of treating cellulosic materials, including treating cellulose-containing materials with a composition that provides increased hydrophobicity while maintaining biodegradability of the cellulosic components. The method as defined in the claims provide for esterification of available hydroxyl groups on cellulose and do not require the use of Lewis acids or separate catalysts to convert said hydroxyls to esters, where such hydroxyl groups are "masked" by bulky organic chains. The coating may be applied to pre-formed materials.

In an embodiment of the invention as defined in the claimst, the cellulose-containing material exhibits greater hydrophobicity relative to the cellulose-containing material without the treatment.

In an embodiment of the invention as defined in the claims, the first and second solvents include pentane, hexane, heptane, octane, petroleum ether, naphtha, kerosene, petroleum, paraffin oil, benzene, toluene, xylene, mesitylene, ethylbenzene, diethylbenzene, methylene chloride, chloroform, 1,2-dichloro-ethane, chlorobenzene, carbon tetrachloride, tetrabromoethylene, cyclopentane, cyclohexane, methylcyclohexane, anisole (methyl phenyl ether), tert-butyl methyl ether, dibenzyl ether, diethyl ether, dioxane, diphenyl ether, methyl vinyl ether, tetrahydrofuran, triisopropyl ether, diethylene glycol diethyl ether, diethylene glycol dimethyl ether (diglyme), diethylene glycol monobutyl ether, diethylene glycol monomethyl ether, 1,2-dimethoxyethane (DME, monoglyme), ethylene glycol monobutyl ether, triethylene glycol dimethyl ether (triglyme), triethylene glycol monomethyl ether, acetone, diisobutyl ketone, methyl n-propyl ketone, methyl ethyl ketone, methyl isobutyl ketone, methyl formate, methyl acetate, ethyl acetate, n-propyl acetate, n-butyl acetate, and combinations thereof.

In an embodiment of the invention as defined in the claims, the cellulose-based material includes a carton for food storage, a shopping bag, eating utensil, container for holding hot or cold beverages, cup, plate, a bag for food storage, a bottle for carbonated liquid storage, a bottle for non-carbonated liquid storage, film for wrapping food, a garbage disposal container, a food handling implement, a fabric fibre (e.g., cotton or cotton blends), a water storage and conveying implement, a storage and conveying implement for alcoholic or non alcoholic drinks, an outer casing or screen for electronic goods, an internal or external piece of furniture, a curtain, upholstery, and combinations thereof.

In an embodiment of the invention as defined in the claims, the esterified hydroxyl groups are stable at temperatures between about -100° C to about 250° C. In an embodiment of the invention as defined in the claims, the surface of the cellulose-based material exhibits a water contact angle of between about 60° to about 120°. In an embodiment of the invention as defined in the claims, the surface treatment is chemically stable at temperatures of between about 200° C to about 250° C. In an embodiment of the invention as defined in the claims, the portion of the available hydroxyl groups on the cellulose surface which are esterified by the composition is between 60 to about 70%, about 70% to about 80% and about 80% to 90%. In an embodiment of the invention as defined in the claims, the portion of the available hydroxyl groups is about 70%.

In an embodiment of the invention as defined in the claims, the compositions esterifies at least a portion of the hydroxyl groups available via the cellulose of the material with the dicarboxylic acid derivative (see, e.g., linker of Formula (I)) to increase both mechanical and thermal stability. In an embodiment of the invention as defined in the claims, the esterified hydroxyl groups are stable at temperatures between about -100° C to about 300° C. In a further a embodiment of the invention as defined in the claims, the surface of the cellulose-based material exhibits a water contact angle of between about 60° to about 120°. In an embodiment of the invention as defined in the claims, the surface treatment is

chemically stable at temperatures of between about 200° C to about 300° C.

In an embodiment of the invention as defined in the claims, the composition crosslinks adjacent cellulose chains by esterification with both ends of a dicarboxylic acid derivative (Formula (II)) to increase both mechanical and thermal stability. In an embodiment of the invention as defined in the claims, the esterified hydroxyl groups are stable at temperatures between about -100° C to about 300° C. In a further embodiment of the invention as defined in the claims, the surface of the cellulose-based material exhibits a water contact angle of between about 60° to about 120°. In another embodiment of the invention as defined in the claims, the surface treatment is chemically stable at temperatures of between about 200° C to about 300° C.

In an embodiment of the invention as defined in the claims, the composition applied to the cellulose-based (or cellulosic) material is a biodegradable product. In an embodiment of the invention as defined in the claims, the product includes a carton for food storage, a shopping bag, eating utensil, container for holding hot or cold beverages, cup, plate, a bag for food storage, a bottle for carbonated liquid storage, a bottle for non-carbonated liquid storage, film for wrapping food, a garbage disposal container, a food handling implement, a fabric fibre, a water storage and conveying implement, a storage and conveying implement for alcoholic or non alcoholic drinks, an outer casing or screen for electronic goods, an internal or external piece of furniture, a curtain and upholstery.

In an embodiment of the invention as defined in the claims, the method for treating a surface of a cellulose-containing (or cellulosic) material comprises applying to the surface a composition containing an alkanoic acid derivative having the formula (I) or (II):

R-CO-X Formula (I)

$X\text{-}CO\text{-}R\text{-}CO\text{-}X_1$ Formula (II),

where R is a straight-chain, branched-chain, or cyclic aliphatic hydrocarbon radical having from 6 to 50 carbon atoms, and wherein X and $X_1$ are independently Cl, Br, or O(CO)OR; a base; and a first solvent, heating the applied composition on said surface; rinsing the surface with a second solvent; and drying the rinsed surface; where the resulting treated cellulose-containing material exhibits properties including a water contact angle of about 100°, is stable up to at least about 200° C, an oxygen permeability of less than about 10 Barrer units, a water vapour permeability of less than about 20 Barrer units, and combinations thereof.

## BRIEF DESCRIPTION OF THE DRAWINGS

Figure 1 shows an illustration of the surface of a cellulosic material before and after treatmentin accordance with the invention as defined in the claims.

## DETAILED DESCRIPTION OF THE INVENTION

Before the present composition, methods, and methodologies are described, it is to be understood that this disclosure is not limited to particular compositions, methods, and experimental conditions described, as such compositions, methods, and conditions may vary. It is also to be understood that the terminology used herein is for purposes of describing particular embodiments only, and is not intended to be limiting, since the scope of the present invention will be limited only in the appended claims.

As used in this specification and the appended claims, the singular forms "a", "an", and "the" include plural references unless the context clearly dictates otherwise. Thus, for example, references to "a derivatizing agent" includes one or more derivatizing agents, and/or compositions of the type described herein which will become apparent to those persons skilled in the art upon reading this disclosure and so forth.

Unless defined otherwise, all technical and scientific terms used herein have the same meaning as commonly understood by one of ordinary skill in the art to which this invention belongs. Any methods and materials similar or equivalent to those described herein may be used in the practice or testing of the invention as defined in the claims.

It is well known that esters are organic molecules with a high biodegradability as bacterial enzymes readily break them down. They are however relatively stable to chemical agents such as heat.

The present disclosure shows that by treating the surface of cellulose fibers with long chain alkanoic acid derivatives the resulting surface is made strongly hydrophobic, as the cellulosic hydroxyl groups are masked by bulky organic chains (see, e.g., FIGURE 1). Moreover, if the alkanoic acid chain is bifunctional having two carboxyl groups at either end, the resulting diester can function as a crosslink between isolated cellulosic fibers and increase the thermal and mechanical resistance of the cellulosic fiber itself. These organic chains, once removed by bacterial enzymes, are easily digested as such. The derivatized surface displays a great deal of heat resistance, being able to withstand temperatures as high as 250° C and is obviously more impermeant to gases than the naked film underneath. The material

is also transparent and resistant to mechanical damage as it is bound together by covalent bonding. In embodiments of the invention as defined in the claims, the material is semi-transparent, non-transparent and various colors. The material is therefore an ideal solution to the problem of derivatizing the hydrophilic surface of cellulose, in any embodiment in which cellulose materials may be employed.

As used herein, "cellulosic" means natural, synthetic or semisynthetic materials that can be molded or extruded into objects or films or filaments, which may be used for making such objects or films or filaments, that is structurally and functionally similar to cellulose, e.g., coatings and adhesives (e.g., carboxymethylcellulose). In another example, cellulose, a complex carbohydrate $(C_6H_{10}O_5)_n$ that is composed of glucose units, which forms the main constituent of the cell wall in most plants, is cellulosic.

As used herein, "hydrophobicity" means the property of being water-repellent, tending to repel and not absorb water.

As used herein, "cellulose-containing material" or "cellulose-based material" means a composition which consists essentially of cellulose. For example, such material may include, but is not limited to, a carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre (e.g., cotton or cotton blends), a water storage and conveying implement, alcoholic or non-alcoholic drinks, an outer casing or screen for electronic goods, an internal or external piece of furniture, a curtain and upholstery.

As used herein, "water contact angle" means the angle measured through a liquid at which a liquid/vapor interface meets a solid surface. It quantifies the wettability of the solid surface by the liquid. The contact angle is a reflection of how strongly the liquid and solid molecules interact with each other, relative to how strongly each interacts with its own kind. On many highly hydrophilic surfaces, water droplets will exhibit contact angles of 0° to 30°. Generally, if the water contact angle is larger than 90°, the solid surface is considered hydrophobic.

As used herein, "water vapour permeability" means breathability or a textile's ability to transfer moisture. There are at least two different measurement methods. One, the MVTR Test (Moisture Vapour Transmission Rate) in accordance with ISO 15496, describes the water vapor permeability (WVP) of a fabric and therefore the degree of perspiration transport to the outside air. The measurements determine how many grams of moisture (water vapor) pass through a square meter of fabric in 24 hours (the higher the level, the higher the breathability).

As used herein, "oxygen permeability" means the degree to which a polymer allows the passage of a gas or fluid. Oxygen permeability (Dk) of a material is a function of the diffusivity (D) (i.e., the speed at which oxygen molecules traverse the material) and the solubility (k) (or the amount of oxygen molecules absorbed, per volume, in the material). Values of oxygen permeability (Dk) typically fall within the range 10-150 x $10^{-11}$ ($cm^2$ ml $O_2$)/(s ml mmHg). A semi-logarithmic relationship has been demonstrated between hydrogel water content and oxygen permeability (Unit: Barrer unit). The International Organization for Standardization (ISO) has specified permeability using the SI unit hectopascal (hPa) for pressure. Hence Dk = $10^{-11}$ ($cm^2$ ml $O_2$)/(s ml hPa). The Barrer unit can be converted to hPa unit by multiplying it by the constant 0.75.

As used herein "biodegradable," including grammatical variations thereof, means capable of being broken down especially into innocuous products by the action of living things (e.g., by microorganisms).

As used herein, "neat" means there is substantially no other molecule present in the substance including the absence of a solvent.

The process as disclosed includes a one step reaction involving a solvent (e.g., toluene), an alkanoic acid derivative (e.g., acid halide) and a base such as pyridine to be placed on a cellulosic-containing surface and heated, in embodiments, for a period of minutes to hours (it should be readily apparent to one of skill in the art that the time period and temperature used in the reaction may vary depending on the reactants and may be adjusted accordingly). In embodiments, any resulting gases are vented. The process as disclosed ensures that the hydroxyl groups on the surface are permanently attached (covalently linked) to the alkyl groups and may only be degraded by bacterial enzymatic intervention or very harsh acid or base extremes.

The acid derivatives suitable for the practice of the present invention as defined in the claims are those having the general formula:

R-CO-X Formula (I)

or

$X\text{-}CO\text{-}R\text{-}CO\text{-}X_1$ Formula (II),

wherein CO is the carbonyl group C=O, R is selected from straight-chain, branched-chain, or cyclic aliphatic hydrocarbon radicals having from about 6 to 50 carbon atoms and X and $X_1$ independently represent the specific acid derivative

substituent, such as Cl, Br or O(CO)OR in case of anhydrides. In an embodiment of the invention as defined in the claims, X and $X_1$ may be the same or different.

In an embodiment of the invention as defined in the claims, the linkers themselves may be linked in structures such as:

$$MFC\text{-}X_1\text{-}CO\text{-}R\text{-}CO\text{-}X_2\text{-}MFC \qquad \text{Formula (III)},$$

wherein CO is the carbonyl group C=O, R is selected from straight-chain, branched-chain, or cyclic aliphatic hydrocarbon radicals having from about 6 to 50 carbon atoms and $X_1$ and $X_2$ represent the specific acid derivative substituent, such as Cl, Br or O(CO)OR in case of anhydrides. In an embodiment of the invention as defined in the claims, $X_1$ and $X_2$ may be the same or different, wherein MFC is microfibrillated cellulose.

In an embodiment of the invention as defined in the claims, other linkers may include:

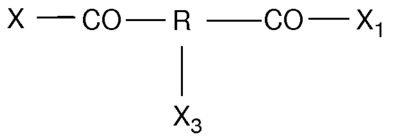

Formula (IV)

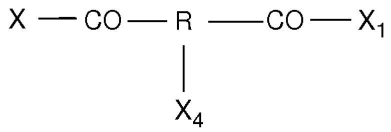

Formula (V),

wherein CO is the carbonyl group C=O, R is selected from straight-chain, branched-chain, or cyclic aliphatic hydrocarbon radicals having from about 6 to 50 carbon atoms, and X, $X_1$, $X_3$, and $X_4$ independently represent the specific acid derivative substituent, such as Cl, Br or O(CO)OR in case of anhydrides. In an embodiment of the invention as defined in the claims, X, $X_1$, $X_3$, and $X_4$ may be the same or different.

In an embodiment of the invention as defined in the claims, $X_3$ and $X_4$ represent derivatives that may allow crosslinking to each other after the MFC has been modified by X and $X_1$.

In an embodiment of the invention as defined in the claims, the crosslinkers above may be used to conjugate a mixture of different celluloses, including the introduction of ligands that may allow crosslinking of said difference celluloses. In one aspect, the resulting mixture may provide more favorable physical or chemical properties to the surface. In another aspect, linkers may include:

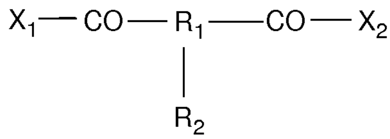

Formula (VI)

wherein CO is the carbonyl group C=O, $R_1$ and $R_2$ are independently selected from straight-chain, branched-chain, or cyclic aliphatic hydrocarbon radicals having from about 6 to 50 carbon atoms, and $X_1$ and $X_2$ independently represent the specific acid derivative substituent, such as Cl, Br or O(CO)OR in case of anhydrides. In an embodiment of the invention as defined in the claims, $R_1$ and $R_2$ may be the same or different. In an embodiment of the invention as defined in the claims, R1 and R2 may be the same or different, wherein $R_2$ comprises reactive groups that allow crosslinking to other $R_2$ groups, $R_1$ or to cellulose. In a related aspect, $X_1$, and $X_2$ may be the same or different.

In an embodiment of the invention as defined in the claims, the cellulose material is pretreated to add additional OH groups to the cellulose surface which in turn are esterfied by the alkanoic acid derivatives to increase mechanical and thermal stability as well increase tensile strength.

In an embodiment of the invention as defined in the claims, the compositions esterifyy at least a portion of the hydroxyl groups available via the cellulose of the material with the dicarboxylic acid derivative (see, e.g., linker of Formula (I)) to increase both mechanical and thermal stability. In an embodiment of the invention as defined in the claims, the esterified hydroxyl groups are stable at temperatures between about -100° C to about 300° C. In a further embodiment of the invention as defined in the claims, the surface of the cellulose-based material exhibits a water contact angle of between about 60° to about 120°. In another embodiment of the invention as defined in the claims, the surface treatment is chemically stable at temperatures of between about 200° C to about 300° C.

In an embodiment of the invention as defined in the claims, the compositions above crosslink adjacent cellulose chains by esterification with both ends of a dicarboxylic acid derivative (see, e.g., linker of Formula (II)) to increase both mechanical and thermal stability. In an embodiment of the invention as defined in the claims, the esterified hydroxyl groups are stable at temperatures between about -100° C to about 300° C. In a further embodiment of the invention as

defined in the claims, the surface of the cellulose-based material exhibits a water contact angle of between about 60° to about 120°. In another embodiment of the invention as defined in the claims, the surface treatment is chemically stable at temperatures of between about 200° C to about 300° C.

In an embodiment of the invention as defined in the claims, the method may be used on any cellulose-based surface, including but not limited to, a film, a rigid container, a fabric or the like. In addition, the method may include the use of a carboxylic acid halide or analog (e.g., anhydride, ketenes and the like), a suitable nonprotic, non-nucleophilic solvent in which the reaction may proceed (e.g., toluene, xylene, dioxane, aliphatic and aromatic esters and esters) and a non-nucleophilic base to neutralize any evolved acidity (e.g., but not limited to, pyridine). In an embodiment of the invention as defined in the claims, the solvent may be brought to between about 100° C to about120° C under stirring. The non-nucleophilic base, which may be present at between about 5% to about 10% of the reaction volume, may be added to the acid halide, which acid halide may be present at between about 5% to about 10%, whereby the combined materials (i.e., modifying mixture) above is ready to be applied to a cellulose-containing surface (i.e., the substrate). The substrate which may be dried prior to application (e.g., at about 100° C), may be treated with the modifying mixture by dipping, for example, and allowing the surface to be exposed to the mixture for about 2 minutes to about 5 minutes. The surface may then be removed from the mixture and rinsed with water or a hydro-polar organic solvent solution (e.g., 70% EtOH) to remove traces of the reactants, which solutions would be apparent to one of skill in the art. The substrate may be air dried or heated to dry the surface, after which the modified material is ready for use.

In general, it has been found that acyl groups containing fewer than about 6 carbon atoms in chain length do not produce satisfactory water-repellency. Accordingly, chain lengths greater than 6 carbon atoms may be used to practice the invention as disclosed. In embodiments, chain lengths may be 8-50, 10-40, and 10-30 carbon atoms. In an embodiment of the invention as defined in the claims, the carbon atom chain length may be 10-20 carbon atoms. Exemplary of compounds wherein R (including $R_1$ and/or $R_2$) is selected from aliphatic hydrocarbon radicals are caprylyl chloride, decanoyl chloride, lauroyl chloride, palmitoyl chloride and myristoyl chloride. Exemplary of compounds wherein R is selected from cyclic aliphatic hydrocarbon radicals is cyclohexanecarboxylic acid halide. Generally, however, straight-chain acyclic aliphatic acid halides or anhydrides may be used for this process as they are usually cheaper and more readily available, and also because the branched-chain and cyclic hydrocarbon radicals are not easily biodegradable. In an embodiment of the invention as defined in the claims, a mixture of two or more acid anhydrides is used. Also, acid bromides and acid iodides react in similar ways to the acid chlorides and may be substituted therefor. However, because the bromides and iodides are generally more expensive and less readily available, the equivalent acid chlorides may be used. For the practice of the invention as defined in the claims, ordinary commercial grade acid chlorides have been found wholly suitable, the only necessary precaution being to prevent exposure of the easily hydrolyzable acid anhydrides to moisture.

In an embodiment of the invention as defined in the claims, acid derivatives (or derivatizing agents) include acid chlorides, acid bromides, acid iodides, anhydrides, ketenes, diketenes, chlorocarbolic acid esters, carbonic acid diesters, 2,5-diketooxazolidines, isatinic anhydride, isocyanates, carbamoyl chlorides, thiocyanates, thiocarbamoyl chlorides, sulfonyl chlorides, sulfonic acid anhydrides, N-chlorosulfonamides, sulfinic acid chlorides, N-chlorosulfinamides, and combinations thereof. In embodiments, the amount of acid derivative (or derivatizing agent) present in the coating mixture is about 0.1M to about 1M, about1M to about 2M, in embodiments about 2M to about 3M, in embodiments about 0.1M to about 3M.

While not being bound by theory, the thickness of the coating as disclosed is independent of the amount of reagent, and instead relies on the length of the alkyl chain R, as there is no physical absorption of the coating on the substrate, but a chemical linking reaction, which may be variable, on the hydroxyl layer of the surface. Further, such reaction (i.e., esterification) may not be reiterated once the hydroxyl groups have reacted with the acid derivative.

No special preparation of the material is necessary in practicing the invention as defined in the claims, including that no Lewis acids or separate catalysts are required, except that the surface to be treated should be clean and free of dirt and excess moisture. In an embodiment of the invention as defined in the claims, normally air-dried material which contains a few percent adsorbed moisture may be used. In an embodiment of the invention as defined in the claims, material may be dried prior to treatment (e.g., at about 100° C to about 110° C, for a few minutes) to remove most of the adsorbed moisture. The degree of water impermeability may be controlled by selection of the thickness of the cellulose to be treated and also by varying the treatment conditions, in particular the acid derivative selected, the concentration of acid derivative in the reaction chamber and the duration of the exposure.

Depending on the source, the cellulose may be nanocellulose, cellulose nanofibres, whiskers or microfibril, microfibrillated, cotton or cotton blends, or nanofibril cellulose.

In an embodiment of the invention as defined in the claims, the amount of coating applied is sufficient to completely cover at least one surface of a cellulose-containing material. For example, the coating may be applied to the complete outer surface of a container, the complete inner surface of a container, or a combination thereof. In an embodiment of the invention as defined in the claims, the complete upper surface of a film may be covered by the coating, or the complete under surface of a film may be covered by the coating, or a combination thereof. In an embodiment of

the invention as defined in the claims, the lumen of a device/instrument may be covered by the coating or the outer surface of the device/instrument may be covered by the coating, or a combination thereof. In an embodiment of the invention as defined in the claims, the amount of coating applied is sufficient to partially cover at least one surface of a cellulose-containing material. For example, only those surfaces exposed to the ambient atmosphere are covered by the coating, or only those surfaces that are not exposed to the ambient atmosphere are covered by the coating. As will be apparent to one of skill in the art, the amount of coating applied will be dependent on the use of the material to be covered.

Any suitable coating process may be used to deliver any of the various coatings applied in the course of practicing the invention as defined in the claims. In an embodiment of the invention as defined in the claims, coating processes include immersion, spraying, painting, and any combination of any of these processes, alone or with other coating processes adapted for practicing the methods as disclosed.

In general, longer chain acid derivatives give greater impermeability, other factors such as depth of cellulose treated being equal. By increasing the concentration of acid derivative, for example, to about one molar or increasing the exposure time, an acid derivative may react more extensively with the cellulose being treated with the net result that again improved water-repellent characteristics are exhibited.

The invention as defined in the claims provides a method to achieve such coating by dissolving the modifying agent in a suitable solvent, such as a $C_4$-$C_8$ ether, ester, ketones, amides or nitriles, or aromatic compound such as xylene or toluene, alongside a non-nucleophilic base such as pyridine, to absorb the generated acid. The mixture is sprayed on the material to be derivatized and heated to about 100° C to about 115° C, 120° C to about 210° C or about 120° C to about 150° C for a variable period (e.g., for about 10 minutes to about 30 minutes, about 30 minutes to about an hour, about 1 hour to about 1.5 hours, about 2 to about 2.5 hours, from about 2.5 hours to about 3 hours or from about 2 hours to about 3 hours). The surface may then be rinsed with detergent (surfactant) and water or a solvent (e.g., acetone), or mixture thereof, and dried again. A surfactant may be an ionic (cationic and anionic) surfactant, a non-ionic surfactant, or a combination thereof.

Any suitable basic neutralization reagent may be used in accordance with the present invention as defined in the claims as long as the base is non-nucleophilic, so as not to react with the acid derivative. In an embodiment of the invention as defined in the claims, suitable basic neutralization agents may include organic basic agents. Suitable basic agents may include monocyclic compounds and polycyclic compounds having at least one nitrogen atom, such as, for example, secondary amines, which include aziridines, azetidines, piperazines, piperidines, pyridines, bipyridines, terpyridines, dihydropyridines, morpholines, N-alkylmorpholines, 1,4-diazabicyclo[2.2.2]octanes, 1,8-diazabicycloundecanes, 1,8-diazabicycloundecenes, dimethylated pentylamines, trimethylated pentylamines, pyrimidines, pyrroles, pyrrolidines, pyrrolidinones, indoles, indolines, indanones, benzindazones, imidazoles, benzimidazoles, imidazolones, imidazolines, oxazoles, isoxazoles, oxazolines, oxadiazoles, thiadiazoles, carbazoles, quinolines, isoquinolines, naphthyridines, triazines, triazoles, tetrazoles, triethylamine, pyrazoles, pyrazolines, and combinations thereof. In embodiments, the monocyclic and polycyclic compounds may be unsubstituted or substituted at any carbon position on the ring. In embodiments, the amount of base present in the coating mixture may be about 0.1M to about 1M, about 1M to about 2M, about 2M to about 4M, about 0.1M to about 3M, or about 0.1M to about 5M.

Suitable solvents include non-nucleophilic aliphatic hydrocarbons such as pentane, hexane, heptane, octane, and petroleum ether, naphtha, kerosene, petroleum, paraffin oil, etc.; aromatic hydrocarbons such as benzene, toluene, xylene, mesitylene, ethylbenzene, diethylbenzene, etc.; halogenated hydrocarbons, such as methylene chloride, chloroform, 1,2-dichloro-ethane, chlorobenzene, carbon tetrachloride, tetrabromoethylene, etc.; alicyclic hydrocarbons, such as cyclopentane, cyclohexane, and, methylcyclohexane, etc.; ethers, such as anisole (methyl phenyl ether), tert-butyl methyl ether, dibenzyl ether, diethyl ether, dioxane, diphenyl ether, methyl vinyl ether, tetrahydrofuran, triisopropyl ether etc.; glycol ethers, such as diethylene glycol diethyl ether, diethylene glycol dimethyl ether (diglyme), diethylene glycol monobutyl ether, diethylene glycol monomethyl ether, 1,2-dimethoxyethane (DME, monoglyme), ethylene glycol monobutyl ether, triethylene glycol dimethyl ether (triglyme), triethylene glycol monomethyl ether etc.; ketones, such as acetone, diisobutyl ketone, methyl n-propyl ketone; methyl ethyl ketone, methyl isobutyl ketone etc.; esters, such as methyl formate, methyl acetate, ethyl acetate, n-propyl acetate, and n-butyl acetate, etc.; carboxylic acids, such as formic acid, acetic acid, propionic acid, butyric acid, etc. One or more of these compounds may be used, alone or in combination. In an embodiment of the invention as defined in the claims, the amount of solvent present may be about 50% to about 99%, about 60% to about 95%, about 75% to about 90% (vol%).

It will be apparent to one of skill in the art that the selection of cellulose to be treated, the acid derivative reagent, the reaction temperature (or vapor pressure), and the exposure time are process parameters that may be optimized by routine experimentation to suit any particular application for the final product.

In an embodiment of the invention as defined in the claims, among useful coating agents, such agents may include, but are not limited to, acid halides, acid anhydrides, esters, ketenes, diketenes, chlorocarbolic acid esters, carbonic acid diesters, 2,5-diketooxazolidines, isatinic anhydride, isocyanates, carbamoyl chlorides, thiocyanates, thiocarbamoyl chlorides, sulfonyl chlorides, sulfonic acid anhydrides, N-chlorosulfonamides, sulfinic acid chlorides, N-chlorosulfinamides.

The derivatized materials have altered physical properties which may be defined and measured using appropriate tests known in the art. For hydrophobicity the analytical protocol is the contact angle measurement, wherein a droplet of water is deposited on the surface and the angle of the interface measured using one of many commercial instruments available for the purpose. A specific standardized protocol to follow is defined by the American Society for Testing and Materials (protocol ASTM D7334 - 08).

The permeability of a surface to various gases such as water vapour and oxygen may also be altered by the coating process as the barrier function of the material is enhanced. The standard unit measuring permeability is the Barrer and protocols to measure these parameters are also available in the public domain (ASTM std F2476-05 for water vapour and ASTM std F2622-8 for oxygen).

In an embodiment of the invention as defined in the claims, materials treated according to the presently disclosed procedure display a complete biodegradability as measured by the degradation in the environment under microorganismal attack.

Various methods are available to define and test biodegradability including the shake-flask method (ASTM E1279 - 89(2008)) and the Zahn-Wellens test (OECD TG 302 B).

In an embodiment of the invention as defined in the claims, the derivatized surface may be characterized for various parameters pertaining to the newly formed water barrier function as set forth below:

1) Degree of substitution. By comparing the dry weight of the derivatized item and the dry weight of the untreated substrate, the degree of substitution of the hydroxyl groups on the surface may be determined using the equation:

$$\%S = (W_2 - W_1)/(MW - 1 - MWx)/D_{OH} * 100,$$

where $W_2$ and $W_1$ are the weight per unit area after and before treatment, respectively, MW is the molecular weight of the derivatizing agent, MWx is the weight of the moiety attached to the C=O group in the molecule and $D_{OH}$ is the density of the hydroxyl groups on the cellulose surface. Typical results obtained by the methods described herein are in the range of about 60% to about 80% substitution, with a minimum requirement of about 50%.

2) Contact angle. The contact angle between a water droplet and the surface is an indicator of hydrophobicity of the surface itself. It may be measured by standard techniques as recited above. Typical results obtained by the methods as described herein are around 90°, with ranges of about 70° to about 110°.

3) Water vapor transmission rate (see above), which may be used to determine water barrier function. The derivatization leads to an improvement of this parameter by at least two-fold compared to a non-derivatized surface. Typical results obtained by the method as described herein are 670 $g/m^2$ 24h (compared to >1200 $g/m^2$ 24h for untreated surfaces).

4) Heat stability of barrier function. The barrier function is retained at temperatures up to about 200° C using the methods as described herein. This may be determined by heating triglycerides in a coated tray to said temperature and verifying the amount of absorption of the triglycerides onto the tray itself.

Materials suitable for treatment by the process of this invention include various forms of cellulose, such as cotton fibers, plant fibers such as flax, wood fibers, regenerated cellulose (rayon and cellophane), partially alkylated cellulose (cellulose ethers), partially esterified cellulose (acetate rayon), and other modified cellulose materials which have a substantial portion of their hydroxyl groups available for reaction. As stated above, the term "cellulose" includes all of these materials and others of similar polysaccharide structure and having similar properties. Among these the relatively novel material microfibrillated cellulose (nanocellulose) (as defined e.g. in US patent US4374702 and application 20090221812) is particularly suitable for this application as it can form transparent films of high specific resistance. In an embodiment of the invention as defined in the claims, celluloses may include but are not limited to, cellulose triacetate, cellulose propionate, cellulose acetate propionate, cellulose acetate butyrate, nitrocellulose (cellulose nitrate), cellulose sulfate, celluloid, methylcellulose, ethylcellulose, ethyl methyl cellulose, hydroxyethyl cellulose, hydroxypropyl cellulose, hydroxyethyl methyl cellulose, hydroxypropyl methyl cellulose, ethyl hydroxyethyl cellulose, carboxymethyl cellulose, and combinations thereof.

The covalent modification/coating/cross-linking of the cellulose as disclosed, in addition to increasing its hydrophobicity, may also increase its tensile strength and flexibility, thereby further widening its spectrum of use. All biodegradable and partially biodegradable products made from or by using the modified cellulose disclosed in this application are within the scope of the invention as defined in the claims.

Among the possible applications of the coating technology such items include, but are not limited to, containers for all purpose such as boxes, trays, shopping bags, pipes and water conduits, food grade disposable cutlery, plates and bottles, screens for TV and mobile devices, clothing (e.g., cotton or cotton blends) and medical devices to be used on the body or inside it such as contraceptives. Also, the coating technology of the present invention as defined in the

claims may be used on furniture and upholstery, outdoors camping equipment and the like.

The following examples are intended to illustrate but not limit the invention as defined in the claims.

## EXAMPLES

Example 1. Coating a thin transparent film made of microfibrillated cellulose (MFC).

The upper and lower surfaces of a thin transparent film made of microfibrillated cellulose (MFC) were treated with a composition comprising 1 ml of lauroyl chloride (neat) and 1 ml of pyridine (neat) in 20 ml of toluene (neat). After coating the surfaces of the film with the composition, the film was heated to about 110° C for about 3 hours. The sample was subsequently rinsed with acetone and dried. After drying, the sample was assessed for heat stability, water contact angle, and water vapor transmission rate (WVTR) test at 24 hours, 50° C and 50% RH.

The sample coating was chemically stable up to about 200° C, and showed a water contact angle of about 100°, which demonstrated that the material was now hydrophobic. The results of the water vapor transmission test showed superior barrier properties to the uncoated film, whose water permeability was off the instrument scale.

Example 2. Coating a food tray made of sugarcane cellulose.

A food tray of 15 cm by 20 cm in size was treated on its food contact (upper) surface with a composition comprising 10 ml of myristoyl bromide (neat) and 10 ml of triethylamine (neat) in 1000 ml of xylene (neat). After coating the surface(s) of the tray with the composition, the tray was heated to about 140° C for about 3 hours. The tray was subsequently rinsed with acetone and dried. After drying, the tray was assessed for heat stability, water absorption, triglyceride permeability and biodegradability.

The tray coating was chemically stable up to about 250° C, and showed no water absorption up to 30 days after treatment, while remaining fully biodegradable. The tray did not show any permeability to a suspension of triglycerides even after heating at temperatures above the smoke point for the fat (cocoa butter) itself.

Example 3. Tray coating degree of substitution

Cellulose containing tray samples were cut into 3 $cm^2$ areas, weighed, dried in a stove at about 100° C, then weighed again. The samples were coated in 20 ml of dioxane plus 1ml of pyrimidine and 1 ml of myristoyl chloride, and refluxed for 10 minutes. Subsequently, the samples were washed in water:acetone, then dried again and weighed. Results are shown in Table 1.

| | Avg. moles/$cm^2$ | Standard Deviation |
|---|---|---|
| Myristoyl* | 1.85e-005 | 8.33e-007 |
| OH | 2.70e-005 | - |
| * For myristoyl, substitution about 0.03 (i.e., about 3%). | | |

Avg. degree of substitution of OH with the hydrophobic coating was determined to be about 0.68 (i.e., about 70%). See Table 2.

| Sample | Tray Wt. | Dry Wt. | % Solid | Coat. Wt | Wt. of Coat | Moles | Area ($cm^2$) | Mol/$cm^2$ | Deg. of Sub. |
|---|---|---|---|---|---|---|---|---|---|
| Ctrl | 0.4964 | 0.4786 | 96.41 | - | - | - | - | - | - |
| 1 | 0.6379 | 0.6150 | 97.41 | 0.6373 | 0.0223 | 1.06e-004 | 6 | 1.76e-005 | 0.65 |
| 2 | 0.6856 | 0.6692 | 97.61 | 0.6919 | 0.0277 | 1.08e-004 | 6 | 1.79e-005 | 0.66 |
| 3 | 0.7257 | 0.7013 | 96.64 | 0.7257 | 0.244 | 1.16e-004 | 6 | 1.93e-005 | 0.71 |
| 4 | 0.7277 | 0.7029 | 96.59 | 0.7271 | 0.242 | 1.15e-004 | 6 | 1.91e-005 | 0.71 |
| | | | | | | | | | |
| | | | | | | Avg. | 6 | 1.85e-005 | 0.68 |
| | | | | | | Std. Dev. | - | 8.33e-007 | 0.03 |

## Claims

1. A method for treating a surface of a solid cellulose-containing material comprising:

   applying to said surface a composition comprising:

   an alkanoic acid derivative having the formula (I) or formula (II):

   R-CO-X Formula (I)

   $X\text{-}CO\text{-}R\text{-}CO\text{-}X_1$ (II) Formula (II),

   wherein R is a straight-chain, branched-chain, or cyclic aliphatic hydrocarbon radical having from 6 to 50 carbon atoms, and wherein X and $X_1$ are independently Cl, Br, or O(CO)OR,
   a base, and
   a first solvent;

   heating the applied composition on said surface;
   rinsing said surface with a second solvent; and
   drying said rinsed surface,

   wherein said composition esterifies 60-90% of the hydroxyl groups available on the surface of the cellulose-containing material.

2. The method of claim 1, wherein the base is non-nucleophilic, preferably the base is organic and more preferably the organic base is selected from the group consisting of aziridines, azetidines, piperazines, piperidines, pyridines, bipyridines, terpyridines, dihydropyridines, morpholines, N-alkylmorpholines, 1,4-diazabicyclo[2.2.2]octanes, 1,8-diazabicycloundecanes, 1,8-diazabicycloundecenes, dimethylated pentylamines, trimethylated pentylamines, pyrimidines, pyrroles, pyrrolidines, pyrrolidinones, indoles, indolines, indanones, benzindazones, imidazoles, benzimidazoles, imidazolones, imidazolines, oxazoles, isoxazoles, oxazolines, oxadiazoles, thiadiazoles, carbazoles, quinolines, isoquinolines, naphthyridines, triazines, triazoles, tetrazoles, triethylamines, pyrazoles, pyrazolines, and combinations thereof.

3. The method of claim 1, wherein the first and second solvents are selected from the group consisting of pentane, hexane, heptane, octane, petroleum ether, naphtha, kerosene, petroleum, paraffin oil, benzene, toluene, xylene, mesitylene, ethylbenzene, diethylbenzene, methylene chloride, chloroform, 1,2-dichloro-ethane, chlorobenzene, carbon tetrachloride, tetrabromoethylene, cyclopentane, cyclohexane, methylcyclohexane, anisole (methyl phenyl ether), tert-butyl methyl ether, dibenzyl ether, diethyl ether, dioxane, diphenyl ether, methyl vinyl ether, tetrahydrofuran, triisopropyl ether, diethylene glycol diethyl ether, diethylene glycol dimethyl ether (diglyme), diethylene glycol monobutyl ether, diethylene glycol monomethyl ether, 1,2-dimethoxyethane (DME, monoglyme), ethylene glycol monobutyl ether, triethylene glycol dimethyl ether (triglyme), triethylene glycol monomethyl ether, acetone, diisobutyl ketone, methyl n-propyl ketone; methyl ethyl ketone, methyl isobutyl ketone, methyl formate, methyl acetate, ethyl acetate, n-propyl acetate, n-butyl acetate, and combinations thereof.

4. The method of claim 1, wherein the solid cellulose-containing material comprises a cellulose selected from the group consisting of nanocellulose, cellulose nanofibres, whiskers or microfibril, microfibrillated or nanofibril cellulose, sugarcane cellulose, cotton or cotton blends, and combinations thereof.

5. The method of claim 1, wherein the alkanoic acid derivative is selected from the group consisting of acid chlorides, acid bromides, acid iodides, anhydrides, ketenes, diketenes, chlorocarbolic acid esters, carbonic acid diesters, 2,5-diketooxazolidines, isatinic anhydride, isocyanates, carbamoyl chlorides, thiocyanates, thiocarbamoyl chlorides, sulfonyl chlorides, sulfonic acid anhydrides, N-chlorosulfonamides, sulfinic acid chlorides, N-chlorosulfinamides, and combinations thereof, and
   wherein the resulting surface of the cellulose-based material exhibits a water contact angle of 100°.

6. The method of claim 5, wherein said esterified hydroxyl groups are stable from -100 °C to 300 C.

7. The method of claim 5, wherein the solid cellulose-containing material is selected from the group consisting of a

carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre, a water storage and conveying implement, a storage and conveying implement for alcoholic or non-alcoholic drinks, an outer casing or screen for electronic goods, an internal or external piece of furniture, a curtain, and combinations thereof.

**8.** A product resulting from the process of claim 1, wherein the surface of the solid cellulose-containing material exhibits a water contact angle of between 60° to 120°, and wherein 60-90% of the hydroxyl groups on the surface of the cellulose-containing material are esterified.

**9.** The product of claim 8, where the surface treatment is chemically stable up to temperatures of between 200° C to 300° C.

**10.** The product of claim 8, wherein the water vapour permeability of the treated surface is between 10 Barrer units to 20 Barrer units.

**11.** The product of claim 8, wherein the oxygen permeability of the treated surface is between 10 Barrer units to 20 Barrer units.

**12.** The product of claim 8, wherein the product is biodegradable.

**13.** The product of claim 8, wherein the product is selected from the group consisting of a carton for food storage, a bag for food storage, a shopping bag, eating utensil, container for holding hot or cold beverages, cup, plate, a bottle for carbonated liquid storage, a bottle for non-carbonated liquid storage, film for wrapping food, a garbage disposal container, a food handling implement, a fabric fibre, a water storage and conveying implement, a storage and conveying implement for alcoholic or non-alcoholic drinks, an outer casing or screen for electronic goods, an internal or external piece of furniture, a curtain, and combinations thereof.

**14.** The method of claim 1, wherein the solid cellulose-containing material is a film or a fabric.

**Patentansprüche**

**1.** Verfahren zum Behandeln einer Fläche eines festen cellulosehaltigen Materials, aufweisend:

Aufbringen einer Zusammensetzung auf die Fläche, die aufweist:

ein Alkansäurederivat mit der Formel (I) oder Formel (II):

R-CO-X Formel (I)

$X\text{-}CO\text{-}R\text{-}CO\text{-}X_1$ (II) Formel (II),

wobei R ein geradkettiges, verzweigtkettiges oder cyclisches aliphatisches Kohlenwasserstoffradikal mit 6 bis 50 Kohlenstoffatomen ist, und wobei X und $X_1$ unabhängig voneinander Cl, Br oder O(CO)OR sind,
eine Base; und
ein erstes Lösemittel;

Erwärmen der aufgebrachten Zusammensetzung auf der Fläche;
Spülen der Fläche mit einem zweiten Lösemittel; und
Trocknen der gespülten Fläche,

wobei die Zusammensetzung 60 bis 90 % der auf der Fläche des cellulosehaltigen Materials verfügbaren Hydroxylgruppen verestert.

**2.** Verfahren nach Anspruch 1, wobei die Base bevorzugt nichtnukleophil ist, die Base bevorzugt organisch ist und die organische Base mehr bevorzugt ausgewählt ist aus der Gruppe bestehend aus Aziridinen, Azetidinen, Piperazinen, Piperidinen, Pyridinen, Bipyridinen, Terpyridinen, Dihydropyridinen, Morpholinen, N-Alkylmorpholinen, 1,4-Diazabicyclo[2.2.2]oktanen, 1,8-Diazabicycloundecanen, 1,8-Diazabicycloundecenen, dimethylierten Pentylaminen, trimethylierten Pentylaminen, Pyrimidinen, Pyrrolen, Pyrrolidinen, Pyrrolidinonen, Indolen, Indolinen, Indanonen, Benzindazonen, Imidazolen, Benzimidazolen, Imidazolonen, Imidazolinen, Oxazolen, Isoxazolen, Oxazolinen, Oxadiazolen, Thiadiazolen, Carbazolen, Chinolinen, Isochinolinen, Naphthyridinen, Triazinen, Triazolen, Tetrazolen, Triethylaminen, Pyrazolen, Pyrazolinen und Kombinationen davon.

3. Verfahren nach Anspruch 1, wobei die ersten und zweiten Lösemittel ausgewählt sind aus der Gruppe bestehend aus Pentan, Hexan, Heptan, Oktan, Petrolether, Naphtha, Kerosin, Erdöl, Paraffinöl, Benzol, Toluol, Xylol, Mesitylen, Ethylbenzol, Diethylbenzol, Methylenchlorid, Chloroform, 1,2-Dichlorethan, Chlorbenzol, Tetrachlorkohlenstoff, Tetrabromethylen, Cyclopentan, Cyclohexan, Methylcyclohexan, Anisol (Methylphenylether), tert-Butyldimethylether, Dibenzylether, Diethylether, Dioxan, Diphenylether, Methylvinylether, Tetrahydrofuran, Triisopropylether, Diethylenglykoldiethylether, Diethylenglykoldimethylether (Diglyme), Diethylenglykolmonobutylether, Diethylenglykolmonomethylether, 1,2-Dimethoxyethan (DME, Monoglyme), Ethylenglykolmonobutylether, Triethylenglykoldimethylether (Triglyme), Triethylenglykolmonomethylether, Aceton, Diisobutylketon, Methyln-propylketon; Methylethylketon, Methylisobutylketon, Ameisensäuremethylester, Methylacetat, Ethylacetat, n-Propylacetat, Butylacetat und Kombinationen davon.

4. Verfahren nach Anspruch 1, wobei das feste cellulosehaltige Material eine Cellulose aufweist, die ausgewählt ist aus der Gruppe bestehend aus Nanocellulose, Cellulosenanofasern, Backenbart oder Mikrofibrille, mikrofibrillierter oder Nanofibrillencellulose Zuckerrohrcellulose, Baumwolle oder Baumwollmischungen und Kombinationen davon.

5. Verfahren nach Anspruch 1, wobei das Alkansäurederivat ausgewählt ist aus der Gruppe bestehend aus Säurechloriden, Säurebromiden, Säureiodiden, Anhydriden, Ketenen, Diketenen, Chlorcarbolsäureestern, Kohlensäurediestern, 2,5-Diketooxazolidinen, Isatinanhydrid, Isocyanaten, Carbamoylchloriden, Rhodaniden, Thiocarbamoylchloriden, Sulfonychloriden, Sulfonsäureanhydriden, N-Chlorsulfonamiden, Sulfinsäurechloriden, N-Chlorsulfinamiden und Kombinationen davon, und
wobei die resultierende Fläche des cellulosebasierten Materials einen Wasserkontaktwinkel von 100° aufweist.

6. Verfahren nach Anspruch 5, wobei die veresterten Hydroxylgruppen von -100 °C bis 300 °C stabil sind.

7. Verfahren nach Anspruch 5, wobei das feste cellulosehaltige Material ausgewählt ist aus der Gruppe bestehend aus einem Karton zur Lebensmittellagerung, einem Beutel zur Lebensmittellagerung, einem Einkaufsbeutel, einem Essutensil, einem Behälter für heiße oder kalte Getränke, einem Becher, einem Teller, einer Flasche zum Aufbewahren von kohlensäurehaltiger Flüssigkeit, einer Flasche zum Aufbewahren von nicht-kohlensäurehaltiger Flüssigkeit, einer Folie zum Einwickeln von Lebensmitteln, einem Abfallbeseitigungsbehälter, einem Lebensmittelverarbeitungshilfsmittel, einer Gewebefaser, einem Wasserspeicherungs- und Transporthilfsmittel, einem Aufbewahrungs- und Transporthilfsmittel für alkoholische oder nichtalkoholische Getränke, einem Außengehäuse oder einer Abschirmung für elektronische Erzeugnisse, einem Möbelstück für den Innen- oder Außenbereich, einen Vorhang und Kombinationen davon.

8. Produkt, das sich aus dem Prozess nach Anspruch 1 ergibt, wobei die Fläche des festen cellulosehaltigen Materials einen Wasserkontaktwinkel zwischen 60 ° bis 120 ° aufweist, und wobei 60 bis 90 % der Hydroxylgruppen auf der Fläche des cellulosehaltigen Materials verestert ist.

9. Produkt nach Anspruch 8, wobei die Oberflächenbehandlung bis zu Temperaturen zwischen 200 °C bis 300 °C chemisch stabil ist.

10. Produkt nach Anspruch 8, wobei die Wasserdampfdurchlässigkeit der behandelten Fläche zwischen 10 Barrer-Einheiten bis 20 Barrer-Einheiten liegt.

11. Produkt nach Anspruch 8, wobei die Sauerstoffdurchlässigkeit der behandelten Fläche zwischen 10 Barrer-Einheiten bis 20 Barrer-Einheiten liegt.

12. Produkt nach Anspruch 8, wobei das Produkt biologisch abbaubar ist.

13. Produkt nach Anspruch 8, wobei das Produkt ausgewählt ist aus der Gruppe bestehend aus einem Karton zur Lebensmittellagerung, einem Beutel zur Lebensmittellagerung, einem Einkaufsbeutel, einem Essutensil, einem Behälter für heiße oder kalte Getränke, einem Becher, einem Teller, einer Flasche zum Aufbewahren von kohlensäurehaltiger Flüssigkeit, einer Flasche zum Aufbewahren von nicht-kohlensäurehaltiger Flüssigkeit, einer Folie zum Einwickeln von Lebensmitteln, einem Abfallbeseitigungsbehälter, einem Lebensmittelverarbeitungshilfsmittel, einer Gewebefaser, einem Wasserspeicherungs- und Transporthilfsmittel, einem Aufbewahrungs- und Transporthilfsmittel für alkoholische oder nichtalkoholische Getränke, einem Außengehäuse oder einer Abschirmung für elektronische Erzeugnisse, einem Möbelstück für den Innen- oder Außenbereich, einen Vorhang und Kombinationen davon.

**14.** Verfahren nach Anspruch 1, wobei das feste cellulosehaltige Material ein Film oder ein Gewebe ist.

**Revendications**

**1.** Procédé de traitement d'une surface d'un matériau contenant de la cellulose solide comprenant :
l'application à ladite surface d'une composition comprenant :

un dérivé d'acide alcanoïque répondant à la formule (I) ou à la formule (II) :

R-CO-X Formule (I)

$X\text{-}CO\text{-}R\text{-}CO\text{-}X_1$ (II) Formule (II),

dans lesquelles R est un radical hydrocarboné aliphatique à chaîne linéaire, ramifiée, ou cyclique ayant de 6 à 50 atomes de carbone, et dans lesquelles X et $X_1$ sont indépendamment Cl, Br, ou O(CO)OR,
une base, et
un premier solvant ;
le chauffage de la composition appliquée sur ladite surface ;
le rinçage de ladite surface avec un second solvant ; et
le séchage de ladite surface rincée,
dans lequel ladite composition estérifie 60 à 90 % des groupes hydroxyle disponibles sur la surface du matériau contenant de la cellulose.

**2.** Procédé selon la revendication 1, dans lequel la base est non nucléophile, de préférence la base est organique et plus préférentiellement la base organique est sélectionnée dans le groupe constitué par les aziridines, les azétidines, les pipérazines, les pipéridines, les pyridines, les bipyridines, les terpyridines, les dihydropyridines, les morpholines, les N-alkylmorpholines, les 1,4-diazabicyclo[2.2.2]octanes, les 1,8-diazabicycloundécanes, les 1,8-diazabicycloundécènes, les pentylamines diméthylées, les pentylamines triméthylées, les pyrimidines, les pyrroles, les pyrrolidines, les pyrrolidinones, les indoles, les indolines, les indanones, les benzindazones, les imidazoles, les benzimidazoles, les imidazolones, les imidazolines, les oxazoles, les isoxazoles, les oxazolines, les oxadiazoles, les thiadiazoles, les carbazoles, les quinoléines, les isoquinoléines, les naphtyridines, les triazines, les triazoles, les tétrazoles, les triéthylamines, les pyrazoles, les pyrazolines, et les combinaisons de ceux-ci.

**3.** Procédé selon la revendication 1, dans lequel les premier et second solvants sont sélectionnés dans le groupe constitué par le pentane, l'hexane, l'heptane, l'octane, l'éther de pétrole, le naphta, le kérosène, le pétrole, l'huile de paraffine, le benzène, le toluène, le xylène, le mésitylène, l'éthylbenzène, le diéthylbenzène, le chlorure de méthylène, le chloroforme, le 1,2-dichloro-éthane, le chlorobenzène, le tétrachlorure de carbone, le tétrabromoéthylène, le cyclopentane, le cyclohexane, le méthylcyclohexane, l'anisole (méthyl phényl éther), l'éther tert-butylique méthylique, l'éther dibenzylique, l'éther diéthylique, le dioxane, l'éther diphénylique, l'éther méthyl vinylique, le tétrahydrofurane, l'éther triisopropylique, l'éther diéthylique de diéthylène glycol, l'éther diméthylique de diéthylène glycol (diglyme), l'éther monobutylique de diéthylène glycol, l'éther monométhylique de diéthylène glycol, le 1,2-diméthoxyéthane (DME, monoglyme), l'éther monobutylique d'éthylène glycol, l'éther diméthylique de triéthylène glycol (triglyme), l'éther monométhylique de triéthylène glycol, l'acétone, la diisobutyl cétone, la méthyl n-propyl cétone ; la méthyl éthyl cétone, la méthyl isobutyl cétone, le méthyl formate, l'acétate de méthyle, l'acétate d'éthyle, l'acétate de n-propyle, l'acétate de n-butyle, et les combinaisons de ceux-ci.

**4.** Procédé selon la revendication 1, dans lequel le matériau contenant de la cellulose solide comprend une cellulose sélectionnée dans le groupe constitué par la nanocellulose, les nanofibres de cellulose, microcristaux ou microfibrilles, la cellulose microfibrillée ou les nanofibrilles de cellulose, la cellulose de canne à sucre, le coton ou les mélanges de coton, et les combinaisons de ceux-ci.

5. Procédé selon la revendication 1, dans lequel le dérivé d'acide alcanoïque est sélectionné dans le groupe constitué par les chlorures d'acide, les bromures d'acide, les iodures d'acide, les anhydrides, les cétènes, les dicétènes, les esters de l'acide chlorocarbolique, les diesters de l'acide carbonique, les 2,5-dicétooxazolidines, l'anhydride isatinique, les isocyanates, les chlorures de carbamoyle, les thiocyanates, les chlorures de thiocarbamoyle, les chlorures de sulfonyle, les anhydrides de l'acide sulfonique, les N-chlorosulfonamides, les chlorures d'acide sulfinique, les N-chlorosulfinamides, et les combinaisons de ceux-ci, et
dans lequel la surface obtenue du matériau à base de cellulose présente un angle de contact avec l'eau de 100°.

6. Procédé selon la revendication 5, dans lequel lesdits groupes hydroxyle estérifiés sont stables de -100 °C à 300 °C.

7. Procédé selon la revendication 5, dans lequel le matériau contenant de la cellulose solide est sélectionné dans le groupe constitué par un carton pour le stockage d'aliments, un sac pour le stockage d'aliments, un sac à provisions, de la vaisselle, un récipient pour boissons chaudes ou froides, une tasse, une assiette, une bouteille pour liquide gazeux, une bouteille pour liquide non gazeux, un film d'emballage alimentaire, un conteneur d'ordures, un instrument pour manipuler les aliments, une fibre textile, un instrument de stockage et de transport d'eau, un instrument de stockage et de transport de boissons alcoolisées ou non alcoolisées, un boîtier ou écran pour articles électroniques, un meuble pour l'intérieur ou l'extérieur, un rideau, des combinaisons de ceux-ci.

8. Produit résultant du procédé selon la revendication 1, dans lequel la surface du matériau contenant de la cellulose solide présente un angle de contact avec l'eau compris entre 60° et 120°, et dans lequel 60 à 90 % des groupes hydroxyle sur la surface du matériau contenant la cellulose sont estérifiés.

9. Produit selon la revendication 8, dans lequel le traitement de surface est chimiquement stable jusqu'à des températures comprises entre 200 °C et 300 °C.

10. Produit selon la revendication 8, dans lequel la perméabilité à la vapeur d'eau de la surface traitée est comprise entre 10 unités Barrer et 20 unités Barrer.

11. Produit selon la revendication 8, dans lequel la perméabilité à l'oxygène de la surface traitée est comprise entre 10 unités Barrer et 20 unités Barrer.

12. Produit selon la revendication 8, dans lequel le produit est biodégradable.

13. Produit selon la revendication 8, dans lequel le produit est sélectionné dans le groupe constitué par un carton pour le stockage d'aliments, un sac pour le stockage d'aliments, un sac à provisions, de la vaisselle, un récipient pour boissons chaudes ou froides, une tasse, une assiette, une bouteille pour liquide gazeux, une bouteille pour liquide non gazeux, un film d'emballage alimentaire, un conteneur d'ordures, un instrument pour manipuler des aliments, une fibre textile, un instrument de stockage et de transport d'eau, un instrument de stockage et de transport de boissons alcoolisées ou non alcoolisées, un boîtier ou écran pour articles électroniques, un meuble pour l'intérieur ou l'extérieur, un rideau, des combinaisons de ceux-ci.

14. Procédé selon la revendication 1, dans lequel le matériau contenant de la cellulose solide est un film ou un tissu.

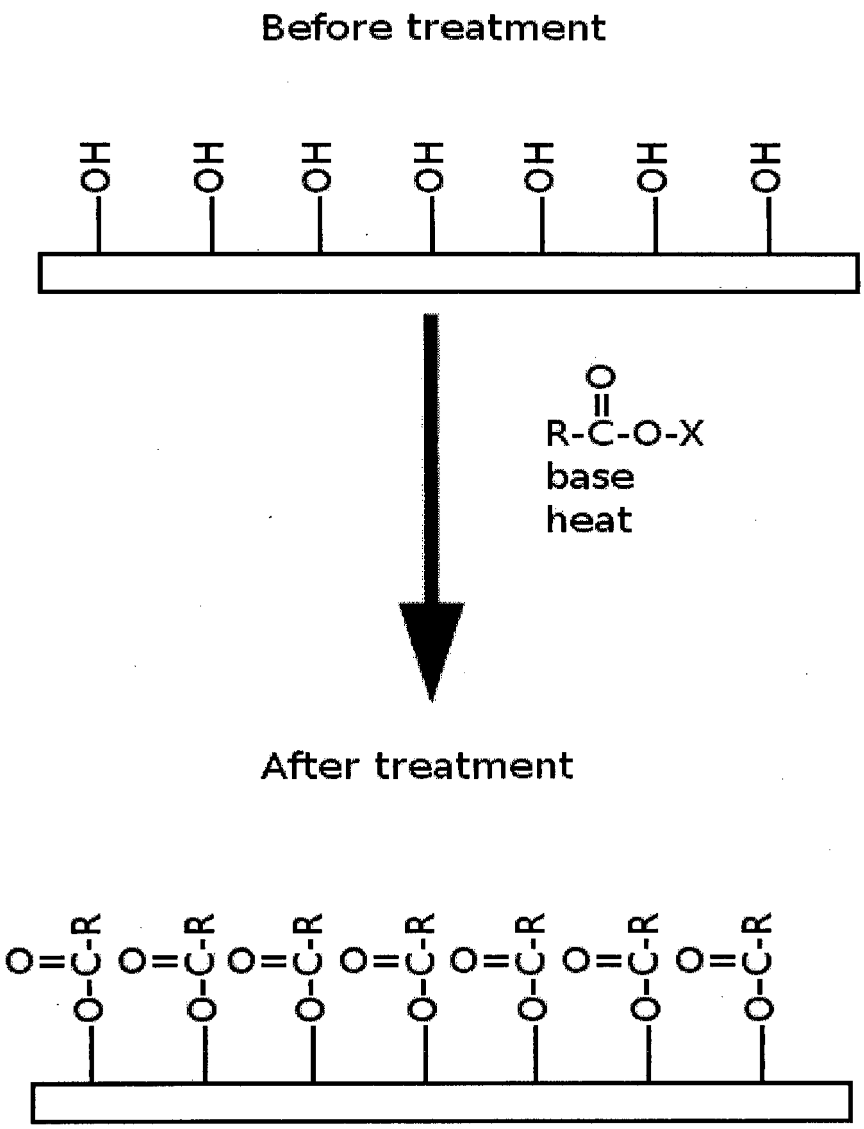


FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5856001 A1
- US 2080265222 A1
- US 4374702 A
- US 20090221812 A


### Non-patent literature cited in the description


- **AULIN et al.** *Cellulose,* 2010, vol. 17, 559-574
- **AULIN et al.** *Langmuir,* 2009, vol. 25 (13), 7675-7685